## Europäisches Patentamt

## European Patent Office

## Office européen des brevets

(19)

(11) Publication number: **0 084 221**
**B1**

(12) **EUROPEAN PATENT SPECIFICATION**

(45) Date of publication of patent specification: **28.10.87**

(51) Int. Cl.⁴: **G 02 B 5/00, B 29 D 11/00**

(21) Application number: **82306422.5**

(22) Date of filing: **02.12.82**

(54) Method for the manufacture of a thin optical membrane.

(30) Priority: **02.12.81 US 326489**
**02.12.81 US 326488**

(43) Date of publication of application:
**27.07.83 Bulletin 83/30**

(45) Publication of the grant of the patent:
**28.10.87 Bulletin 87/44**

(84) Designated Contracting States:
**AT CH DE FR GB IT LI NL**

(56) References cited:
**DE-A-2 448 294**
**GB-A-1 089 358**
**US-A-2 570 273**
**US-A-2 897 544**

**Chemical Abstracts, vol. 78, no. 13, 2 April
1973, Columbus, Ohio, USA N.A.
NECHIPORENKO "Preparation of thin coating
films of uniform thickness by a centrifugal
method", page 95, column 1, abstract no.
86049t & Lakokrasoch. Mater, Ikh Primen, no.
5, 1972, pages 56, 57**

**INSTRUMENTS AND EXPERIMENTAL
TECHNIQUES, vol. 21, no. 3/2, 1978 Y.N.
POPOV "measurement of the thickness of
transparent plates", pages 811, 812**

(73) Proprietor: **ADVANCED SEMICONDUCTOR
PRODUCTS**
**2-1645 East Cliff Drive Building 2
Santa Cruz California 95062 (US)**

(72) Inventor: **Winn, Ray**
**11514 Ventura Boulevard Apartment A
Studio City, California 91604 (US)**
Inventor: **Hershel, Ronald S.**
**4828 Springhill Road
Albany, Oregon 97321 (US)**

(74) Representative: **Smith, Philip Antony et al
REDDIE & GROSE 16 Theobalds Road
London WC1X 8PL (GB)**

(56) References cited:
**JOURNAL OF APPLIED PHYSICS, vol. 44, no. 7,
1973, P.B. MUMOLA "Dye laser tuning with
pellicles", pages 3198, 3199**

Courier Press, Leamington Spa, England.

## Description

This invention relates to a method of making thin, optical membranes.

An important quality of thin, optical pellicles is their uniformity of thickness. Any variation in the thickness will give rise to distortion of light passing through them.

A method of manufacturing an optical membrane is known (US Patent No. 2,897,544) in which the membrane is formed from a solution comprising at least one polymer and at least one solvent. The solution is deposited on a casting disc which is slowly rotating about a substantially horizontal axis. The solution runs across the casting disc which rotates through a fraction of a revolution and forms a membrane as the solvent evaporates. The formed membrane is lifted off as a continuous sheet and stored on a roll.

Use of a method of this kind does not produce individual pellicles. By forming the membrane in a continuous sheet and storing it on a drum there exist stages in the process at which the membrane could be stretched and distorted before being mounted for use.

Methods of spinning a disc to centrifugally spread a solution to form a film are known from British Patent No. 1,089,358 and Chemical Abstracts, Vol. 78, No. 13, Abstract No. 86049t. In these methods the spread films are not formed during the spinning process and they do not result in a sufficiently thin nor uniform film which could be of use in an optical application.

The method of the present invention can produce membranes of a consistant optical quality which are substantially free of distortions.

The present invention is characterised by the steps of depositing the solution on a horizontal surface of a support which is rotatable about a substantially vertical axis; accelerating the support from a first to a second speed of rotation to centrifugally spread the solution radially outwardly; forming the membrane during rotation of the support by evaporation of the solvent in the solution, the radial stresses imposed on the membrane and the said evaporation of the solvent causing the membrane formed to be taut on the surface and substantially free of striae; and removing the membrane, after formation, from the surface of the support.

The thin, optical membranes produced by the method of this invention have substantially uniform thickness. Specifically, they can have a nominal thickness in the range of about 0.5 to about 10 micrometers. The opposite surfaces of these membranes are nearly parallel to one another. Unit-to-unit variations in nominal thickness can be limited to less than about 2%, and preferably less than about 1%. In any one membrane, variations in nominal thickness from edge to edge of the membrane can be limited to less than about 2%, and preferably less than about 1%.

These membranes are highly light-transmissive. Specifically, these membranes transmit in the range of about 84% to about 99% of incident light and can be made to transmit at least about 96%, 98% or even 99% of incident light at one or more predetermined wavelengths of light in the range of about 260 to about 1,000 nanometers. Yet, these membranes can be made to shift the focus of incident light in an optical path less than about a third of the membrane's thickness. Because the membranes are highly light-transmissive, they absorb, diffract and disperse less than about 3% of incident light, and can be made to absorb, diffract and disperse less than about 1% of incident light at one or more specific wavelengths in the range of about 260 to about 1,000 nanometers (nm).

These new membranes have many uses. In particular, they are useful as optically transmissive shields for reticles in projectors such as the Perkin-Elmer 200 series projectors. Placing these new films over photomasks, for example, protects the masks from airborne particulates and other forms of contamination. These membranes are available commercially from Advanced Semiconductor Products under the trade-names Broadband Photomask Pellicle Type BB-2.85 and Low Reflectance Monochromatic Pellicle Type LR-1.

The Type BB-2.85 pellicle is made of nitrocellulose, and has a thickness of 2.85 micrometers. Thickness variations in a single pellicle sample are less than about 0.06 micrometers. The Type BB-2.85 pellicle transmits 94% of incident light, on average, where the incident light is in the range of about 350 to about 450 nanometers. This pellicle absorbs and diffracts less than about 0.3% of incident light in total where the incident light is in the range of about 350 to about 450 nanometers, and shifts the focus of incident light in an optical path less than about one micron. This pellicle typically has an outside diameter of 76.2 millimeters, and an inside diameter of 72.4 millimeters. The pellicle can withstand 275 800 Pa (40 psi) of air pressure from a hose having a 0.5 micrometer filter, and a 0.003 m (0.125 inch) exit orifice provided the orifice is held at least 0.102 m (four inches) from the pellicle. The BB-2.85 pellicle is especially useful as a photomask particulate protection system for 1:1 projection aligners using high-pressure, mercury arc lamps.

The Type LR-1 pellicles are also made of nitrocellulose, and have a thickness of 0.723 plus or minus 0.01 micrometers. Minimum light transmission is about 98% at 436 nanometers and 540 nanometers; 96%, at about 365 nanometers. Incident light reflectance from these pellicles is typically about 2% at 436 and 546 nanometers and about 3% at 365 nanometers. Less than about 0.25% of the incident light is diffracted or absorbed, in total, where the incident light has a wavelength of about 436 or about 546 nanometers, and is less than about 1% in total at 365 nanometers. The Type LR-1 pellicle is strong. It will withstand 206850 Pa (30 psi) air pressure from 3-M's Model 902F airgun, provided the exit orifice is held at least 0.102 m (four inches) from the pellicle. The LR-1 shifts the focus of incident light in an optical path less than about one micron, making the LR-1 especially useful for a 10:1 direct wafer stepper such as the GCA stepper.

The new membranes are also useful as partial optical beam splitters; low-reflectance optical windows for monochromatic optical systems; partial light polarizers; acoustically-sensitive films; high-transmission windows for nuclear radiation detectors; and as antireflective coatings on reflective substrates having a higher index of refraction than these membranes such as bright chrome surfaces.

These membranes can be edge-supported or can be coplanar with a fully or partially-supporting surface such as a photomask, optical flat, mirror or other rigid or flexible surface.

These membranes exhibit excellent elasticity and homogeneity. In particular, these membranes can be used to copy and reproduce large quantities of data in compressed form and with substantially no distortion, especially where these membranes are mounted on mechanically, thermally stable frames or other supports. To effect this copying, we simply form the thin, optical membranes on a surface which carries a large quantity of data in highly compressed form. Our membranes form an accurate, precise duplicate of the data from the original, and can then be utilized as an original for replication and for storage of the data.

In one embodiment, we form a thin, optical membrane on a surface carrying large quantities of data in compressed form as an embossment on the surface. By forming the thin, optical membrane on such embossed surfaces, we replicate identically the surface embossment and the data contained in that embossment.

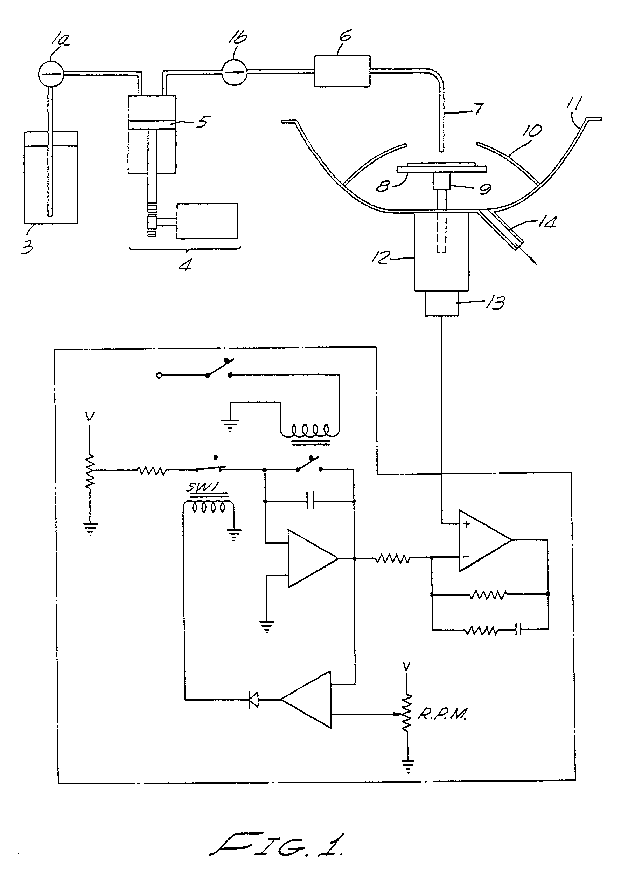

Aspects of the present invention will now be described in more detail by way of example with reference to the accompanying drawing in which: Figure 1 is a schematic diagram of apparatus for use in a method according to the present invention.

The method of making our new membranes includes forming a polymer/solvent mixture, and spin-coating a film of the polymer from the mixture onto a rotatable surface. This surface can form a coplanar support for the membrane, especially where the surface carries no parting or release agent. Where the membrane has been formed on a surface that has a release or parting agent thereon, the membrane can be joined to other support means. With the other support means joined to the membrane, the membrane can then be removed from the surface on which it was formed. For example, after a membrane has been formed on a rotatable surface having a release agent thereon, a closed perimeter ring or frame can be cemented to the membrane. After the cement cures or dries, the ring or frame can be separated from the support surface, carrying with it the membrane bonded to the ring or frame. Alternatively, the membrane can be removed from its support surface by air jets, liquid jets or other detachment means. Such membranes may then be attached to a separate ring, frame or other membrane support.

In one embodiment of our method, we dispense a polymer/solvent mixture onto a rotatable supporting surface that has a release or parting agent thereon, and then spin the surface at increasing rates of rotation until we reach a predetermined speed of rotation. Once we reach the predetermined speed of rotation, we continue to spin the rotatable surface until the membrane forms at the desired thickness and diameter. Tupically, we spin the rotatable surface for a time in the range of about 3 to about 60 seconds, and at a temperature in a range of about 20°C to about 30°C. Membrane thickness and diameter depends primarily upon the viscosities of polymer and solvent, the rate of acceleration and speed of the rotatable support on which we form the membrane, and the final speed of rotation.

As the membrane forms, solvent escapes from the polymer, and the polymer becomes more viscous, particularly near the outer edges of the forming membrane. The polymer/solvent mixture flowing toward the edges of the rotating support surface encounters higher radial acceleration in proportion to the distance from the center of rotation. Moreover, as the rotational speed of the supporting surface increases, higher radial forces are imposed on the polymer. Above the rotating support surface, we introduce a mass of solvent rich air to reduce the rate of solvent evaporation. Variations in membrane thickness can be controlled by adjusting the rate of evaporation and the kind and quantity of thermal treatment, if any, that the membrane undergoes after formation.

To remove the finished membrane from the rotatable support surface and, in particular, to form an edge-supported membrane therefrom, we apply cement or other bonding agent to the surface of a lapped frame. Alternatively, we can apply cement to the film itself through a stencil of appropriate shape. The frame and membrane are then joined to one another, and the cement is permitted to set and dry.

A suitable cement consists of a mixture of one-part, five-minute epoxy resin; one-part, five minute epoxy hardener; and two-parts, 3-pentanone, which dilutes the epoxy and extends its pot life from a nominal three minutes to a nominal 30 minutes. After application of the epoxy/solvent mixture to the frame, the solvent evaporates quickly, causing the epoxy to cure and bond to the film.

After bonding of membrane to frame is complete, the membrane can be cut along the outside perimeter of the frame with a suitable tool, and the frame with attached membrane can then be separated from the support surface. Because of the radial stresses imposed on the membrane during spinning, and because of the reduction in volume of the membrane following evaporation of its solvent, the membrane will be taut, and will have substantially uniform tension.

The thin, optical membranes of our invention are preferably made from one or more polymers such as acrylics and nitrocellulose in a solvent such as alcohol. We could also use such solvents as ketones and polyglycols such as 1,2-dimethoxy-ethane. Preferably, our polymer/solvent mixture also includes a levelling agent such as General Electric's Type SF-69 silicone fluid. In our polymer/solvent mixtures, the polymer can constitute from about 5% to about 30% by weight; the solvent, from about 70% to about 95% by weight; and the levelling agent, from about 0.001% to about 0.01% by weight. As the ratio of solvent to polymer increases, the thickness of the membrane formed from such mixtures, in general, decreases.

Suitable release or parting agents for coating the rotatable surface in our method include Hunt Chemical Company's Superslix I. We can apply the release or parting agent to the rotatable surface by such conventional methods as spinning, dipping or brushing. Some release and some parting agents must also be cured at temperatures above room temperature to be effective.

Apparatus for making our new, thin, optical membranes includes means for dispensing a mixture of polymer and solvent onto a rotatable supporting surface; means for rotating the supporting surface at increasing velocities from a first speed to a final speed; and means for removing the film from the supporting surfaces as an edge-supported or coplanar-supported membrane. The figure accompanying this specification illustrates a preferred embodiment of this apparatus.

In Fig. 1, a polymer/solvent mixture in container 3 is pumped through check valves 1a and 1b by pump 5. Motor means/gear-drive linkage 4 drives the piston in pump 5. The polymer/solvent mixture passes through filter 6 and dispensing means 7 onto rotatable supporting surface 8.

Motor 12 spins chuck 9 and surface 8 in a controlled manner beginning at a predetermined velocity, and accelerating to a second, higher predetermined velocity, then holding that second velocity until the desired membrane forms. During rotation, splash guard/wind shroud means 10 minimizes the tendency of solvent and polymer to escape from the spinner bowl means 11. Drain means 14 provides an exit for unused polymer and solvent. Tachometer 13 is linked to motor 12 on one side and to a suitable servo system on the other side. The servo system initiates rotation of surface 8, and accelerates the velocity of rotation from the start, preferably linearly, at an acceleration in the rate of about 5.24 rad./sec./sec. (50 r.p.m. per sec.) to about 52.36 rad./sec./sec. (500 r.p.m. per sec.) to a final velocity in the range of about 52.36 rad./sec. (500 r.p.m.) to about 261.80 rad./sec. (2500 r.p.m.).

Supporting surface 8 can be a round, square or rectangular, rigid or semi-rigid, optically-polished surface. Supporting surfaces made of metal, glass, and metal film on glass quartz are examples of suitable support surfaces. The surface quality of the support determines the quality of the membrane surface formed thereon.

## Claims

1. A method of making an optical membrane from a solution comprising at least one polymer and at least one solvent, characterized by the steps of depositing the solution on a horizontal surface of a support (8) which is rotatable about a substantially vertical axis: accelerating the support (8) from a first to a second speed of rotation to centrifugally spread the solution radially outwardly; forming the membrane during rotation of the support (8) by evaporation of the solvent in the solution, the radial stresses imposed on the membrane and the said evaporation of the solvent causing the membrane formed to be taut on the surface and substantially free of striae; and removing the membrane, after formation, from the surface of the support (8).

2. A method as claimed in claim 1, characterised in that a release agent is applied to the surface to prevent the membrane adhering thereto.

3. A method as claimed in claim 1 or 2, characterised in that the membrane is cemented to a frame after formation and then removed from the surface.

4. A method as claimed in any of the preceding claims, characterised in that the thickness of the membrane is at least partly controlled by regulating the viscosity of the solution.

5. A method as claimed in any of the preceding claims, characterised in that the thickness of the membrane is at least partly controlled by regulating the second speed of rotation of the support (8).

6. A method as claimed in any of the preceding claims, characterised in that the thickness of the membrane is at least partly controlled by regulating the rate of acceleration of the support.

7. A method as claimed in any of the preceding claims, characterised in that the thickness of the membrane is at least partly controlled by regulating the rate of evaporation of the solvent in the solution.

8. A method as claimed in claim 7, characterised in that a gaseous mixture comprising a proportion of solvent, occupies the volume surrounding the surface in order to regulate the rate of evaporation of solvent from the solution.

9. A method as claimed in any of the preceding claims, characterised in that the membrane thus formed will transmit at least 96% of incident light at at least one wavelength in the range 260—1000 nanometres.

10. A method as claimed in any of the preceding claims, characterised in that the solution also contains a proportion of a levelling agent.

11. A method as claimed in claim 10, characterised in that the proportion of levelling agent in the initial solution is in the range 0.001% to 0.01% by weight.

12. A method as claimed in 10 or 11, characterised in that the levelling agent is a silicone fluid.

13. A method as claimed in any of the preceding claims, characterised in that the proportion of solvent in the initial solution is in the range 70% to 95% by weight.

14. A method as claimed in any of the preceding claims, characterised in that the temperature is between 20°C and 30°C during rotation of the support (8).

15. A method as claimed in any of the preceding claims, characterised in that the support (8) is angularly accelerated at a rate in the range 5.236 radians per second per second (50 r.p.m. per sec.) to 52.36 radians per second per second (500 r.p.m. per sec).

16. A method as claimed in any of the preceding claims, characterised in that the second speed of rotation of the support (8) is in the range 52.36 radians per second (500 r.p.m.) to 261.80 radians per second (2500 r.p.m.).

17. A method as claimed in any of the preceding claims, characterised in that the support (8) is rotated for between 3 and 60 seconds.

18. A method as claimed in any of the preceding claims, characterised in that the polymer is nitrocellulose.

19. A method as claimed in any of claims 1 to 17, characterised in that the polymer is an acrylic.

20. A method as claimed in any of the preceding claims, characterised in that a jet of fluid is used to part the membrane from the surface of the support (8).

**Patentansprüche**

1. Verfahren zur Herstellung einer optischen Membran aus einer Lösung, die wenigstens ein Polymer und wenigstens ein Lösungsmittel enthält, gekennzeichnet durch die Stufen des Auftragens der Lösung auf eine horizontale Fläche eines Trägers (8), der um eine im wesentlichen vertikale Achse drehbar ist, Beschleunigung des Trägers (8) von einer ersten auf eine zweite Drehgeschwindigkeit, um die Lösung unter der Einwirkung von Zentrifugalkräften radial nach außen zu verteilen, Bildung der Membran während der Drehung des Trägers (8) durch Abdampfen des Lösungsmittels in der Lösung, wobei die Radialkräfte, die auf die Membran einwirken und die Abdampfung des Lösungsmittels dazu Anlaß geben, daß die gebildete Membran straff auf der Fläche ist und im wesentlichen frei von Schlieren ist, und des Entfernens der Membran nach der Bildung von der Stützfläche (8).

2. Verfahren nach Anspruch 1, dadurch gekennzeichnet, daß auf die Fläche ein Trennmittel aufgebracht wird, um zu verhindern, daß die Membran an ihr anhaftet.

3. Verfahren nach Anspruch 1 oder 2, dadurch gekennzeichnet, daß die Membran nach der Bildung mit einem Rahmen verklebt wird und dann von der Fläche entfernt wird.

4. Verfahren nach einem der vorhergehenden Ansprüche, dadurch gekennzeichnet, daß die Dicke der Membran wenigstens teilweise durch ein Einstellen der Viskosität der Lösung geregelt wird.

5. Verfahren nach einem der vorhergehenden Ansprüche, dadurch gekennzeichnet, daß die Dicke der Membran wenigstens teilweise durch Einstellen der zweiten Drehgeschwindigkeit des Trägers (8) geregelt wird.

6. Verfahren nach einem der vorhergehenden Ansprüche, dadurch gekennzeichnet, daß die Dicke der Membran wenigstens teilweise durch das Ausmaß der Beschleunigung des Trägers gesteuert wird.

7. Verfahren nach einem der vorhergehenden Ansprüche, dadurch gekennzeichnet, daß die Dicke der Membran wenigstens teilweise durch Regeln der Abdampfgeschwindigkeit des Lösungsmittels in der Lösung geregelt wird.

8. Verfahren nach Anspruch 7, dadurch gekennzeichnet, daß eine gasförmige Mischung, die einen Anteil des Lösungsmittels enthält, das Volumen, welches die Fläche umgibt, einnimmt, um die Abdampfgeschwindigkeit des Lösungsmittels aus der Lösung zu regulieren.

9. Verfahren nach einem der vorhergehenden Ansprüche, dadurch gekennzeichnet, daß die so gebildete Membran wenigstens 96% des einfallenden Lichtes bei einer Wellenlänge von wenigstens 260 bis 1000 Nanometern durchläßt.

10. Verfahren nach einem der vorhergehenden Ansprüche, dadurch gekennzeichnet, daß die Lösung weiters einen Anteil eines Ausgleichsmittels enthält.

11. Verfahren nach Anspruch 10, dadurch gekennzeichnet, daß der Anteil des Ausgleichsmittels in der Ausgangslösung im Bereich von 0,001 bis 0,01 Gew.-% liegt.

12. Verfahren nach Anspruch 10 oder 11, dadurch gekennzeichnet, daß das Ausgleichsmittel ein Silikon-Fluid ist.

13. Verfahren nach einem der vorhergehenden Ansprüche, dadurch gekennzeichnet, daß der Anteil des Lösungsmittels in der Ausgangslösung im Bereich von 70 bis 95 Gew.-% liegt.

14. Verfahren nach einem der vorhergehenden Ansprüche, dadurch gekennzeichnet, daß die Temperatur während der Drehung des Trägers (8) zwischen 20°C und 30°C liegt.

15. Verfahren nach einem der vorhergehenden Ansprüche, dadurch gekennzeichnet, daß der Träger (8) im Ausmaß von 5.236 Radians je Sekunde je Sekunde (50 r.p.m. per sec.) bis 52,36 Radians je Sekunde je Sekunde (500 r.p.m. per sec.) winkelbeschleunigt wird.

16. Verfahren nach einem der vorhergehenden Ansprüche, dadurch gekennzeichnet, daß die zweite Drehgeschwindigkeit des Trägers (8) im Bereich von 52,36 Radians je Sekunde (500 r.p.m.) bis 261,80 Radians je Sekunde (2500 r.p.m.) liegt.

17. Verfahren nach einem der vorhergehenden Ansprüche, dadurch gekennzeichnet, daß der Träger (8) zwischen 3 und 60 Sekunden lang gedreht wird.

18. Verfahren nach einem der vorhergehenden Ansprüche, dadurch gekennzeichnet, daß das Polymer Nitrozellulose ist.

19. Verfahren nach einem der Ansprüche 1 bis 17, dadurch gekennzeichnet, daß das Polymer ein Acrylharz ist.

20. Verfahren nach einem der vorhergehenden Ansprüche, dadurch gekennzeichnet, daß ein Fluidstrahl verwendet wird, um die Membran von der Stützfläche (8) abzulösen.

## Revendications

1. Un procédé pour réaliser une membrane optique à partir d'une solution comprenant au moins un polymère et au moins un solvant, caractérisé par les étapes consistant à: déposer la solution sur une surface horizontale d'un support (8) pouvant tourner autour d'un axe pratiquement vertical; accélérer le support (8) depuis une première vitesse de rotation jusqu'à une seconde vitesse de rotation de manière à étaler par effet centrifuge la solution radialement vers l'extérieur; former la membrane pendant la rotation du support (8) par évaporation du solvant dans la solution, les contraintes radiales imposées à la membrane ainsi que l'évaporation du solvant faisant en sorte que la membrane soit tendue sur la surface et pratiquement dépourvue de striures; et retirer la membrane, après formation, de la surface du support (8).

2. Le procédé de la revendication 1, dans lequel un agent de retrait est appliqué à la surface pour empêcher que la membrane n'adhère à celle-ci.

3. Le procédé de l'une des revendications 1 ou 2, dans lequel la membrane est collée à un cadre après formation, puis retirée de la surface.

4. Le procédé de l'une des revendications précédentes, dans lequel l'épaisseur de la membrane est au moins partiellement contrôlée en régulant la viscosité de la solution.

5. Le procédé de l'une des revendications précédentes, caractérisé en ce que l'épaisseur de la membrane est au moins partiellement contrôlée en régulant le seconde vitesse de rotation du support (8).

6. Le procédé de l'une des revendications précédentes, caractérisé en ce que l'épaisseur de la. membrane est au moins partiellement contrôlée en régulant le taux d'accélération du support.

7. Le procédé de l'une des revendications précédentes, dans lequel l'épaisseur de la membrane est au moins partiellement contrôlée en régulant la vitesse d'évaporation du solvant dans la solution.

8. Le procédé de la revendication 7, dans lequel un mélange gazeux comprenant une certaine proportion du solvant occupe le volume entourant la surface, de manière à réguler la vitesse d'évaporation du solvant de la solution.

9. Le procédé de l'une des revendications précédentes, caractérisé en ce que la membrane ainsi formée transmettra au moins 96% de la lumière incidente, au moins pour une longueur d'onde comprise entre 260 et 1000 nm.

10. Le procédé de l'une des revendications précédentes, dans lequel la solution contient également une certaine proportion d'un agent de nivellement.

11. Le procédé de la revendication 10, dans lequel la proportion de l'agent de nivellement dans la solution initiale est comprise entre 0,001 et 0,01% en poids.

12. Le procédé de l'une des revendications 10 ou 11, dans lequel l'agent de nivellement est un fluide silicone.

13. Le procédé de l'une des revendications précédentes, dans lequel la proportion du solvant dans la solution initiale est comprise entre 70 et 95% en poids.

14. Le procédé de l'une des revendications précédentes, dans lequel la température est comprise entre 20 et 30°C pendant la rotation du support (8).

15. Le procédé de l'une des revendications précédentes, dans lequel le support (8) est soumis à une accélération angulaire à un taux compris entre 5,236 rad/s² (50 tr/mn/s) environ et 52,36 rad/s² (500 tr/mn/s).

16. Le procédé de l'une des revendications précédentes, dans lequel la seconde vitesse de rotation du support (8) est comprise entre 52,36 rad/s (500 tr/mn) et 261,80 rad/s (2500 tr/mn).

17. Le procédé de l'une des revendications précédentes, caractérisé en ce que l'on fait tourner le support (8) pendant une durée comprise entre 3 et 60 s.

18. Le procédé de l'une des revendications précédentes, dans lequel le polymère est la nitrocellulose.

19. Le procédé de l'une des revendications 1 à 17, dans lequel le polymère est une résine acrylique.

20. Le procédé de l'une des revendications précédentes, dans lequel un jet de fluide est utilisé pour séparer la membrane de la surface du support (8).

FIG. 1.